# EUROPÄISCHE PATENTSCHRIFT

(11) **EP 1 974 809 B1**
(45) Veröffentlichungstag und Bekanntmachung des Hinweises auf die Patenterteilung: **29.09.2010**
(21) Anmeldenummer: 07005547.0
(22) Anmeldetag: 19.03.2007
(51) Int. Cl.: B01J 23/44, B01J 23/46, B01D 53/94, B01J 37/02, B01J 35/00

(54) **Doppelschichtiger Dreiweg-Katalysator**
Double layer three-way catalytic converter
Catalyseur trois voies à double couche

(43) Veröffentlichungstag der Anmeldung: 01.10.2008
(73) Patentinhaber: Umicore AG & Co. KG, 63457 Hanau-Wolfgang (DE)
(72) Erfinder: Rösch, Martin, Dr., 63110 Rodgau (DE); Lindner, Dieter, Dr., 63457 Hanau (DE); Klingmann, Raoul, Dr., 63755 Alzenau (DE); DeCola, Patrizia, Dr., 71634 Ludwigsburg (DE); Richter, Jörg-Michael, 60389 Frankfurt a. M. (DE); Schmidt, Marcus, 65462 Ginsheim (DE)

(56) Entgegenhaltungen:
- EP-A- 0 875 290
- EP-A- 1 541 220
- US-A- 5 212 142
- US-A- 5 597 771
- US-A- 6 080 375
- US-A1- 2003 180 197

## Beschreibung

Die Erfindung betrifft einen Dreiweg-Katalysator, der aus zwei übereinander liegenden, katalytisch aktiven Schichten aufgebaut ist, sich für die Reinigung der Abgase von Verbrennungsmotoren eignet und eine hervorragende katalytische Aktivität bei außerordentlicher thermischer Alterungsstabilität aufweist.

Dreiweg-Katalysatoren werden in großen Stückzahlen für die Reinigung der Abgase von im wesentlichen stöchiometrisch betriebenen Verbrennungsmotoren eingesetzt. Sie sind in der Lage, die drei wesentlichen gasförmigen Schadstoffe des Motors, nämlich Kohlenwasserstoffe, Kohlenmonoxid und Stickoxide, gleichzeitig zu unschädlichen Komponenten umzusetzen. Häufig kommen dabei doppelschichtige Katalysatoren zum Einsatz, die eine Trennung verschiedener katalytischer Vorgänge und damit eine optimale Abstimmung der katalytischen Wirkungen in den beiden Schichten ermöglichen. Katalysatoren dieser Art werden zum Beispiel in EP 1 046 423, EP 0 885 650 oder WO 95/35152 beschrieben. Enthalten solche doppelschichtigen Katalysatoren Palladium als katalytisch aktives Edelmetall, so wird bei ihrer Herstellung in der Regel dafür Sorge getragen, daß Palladium räumlich getrennt vom ebenfalls als katalytisch aktive Komponente enthaltenen Rhodium vorliegt. So enthalten die in der EP 0 885 650 und WO 95/35152 beschriebenen Katalysatoren stets Rhodium (ggf. in Gegenwart von Platin) in der äußeren, zweiten Katalysatorschicht, während Palladium (ggf. ebenfalls in Gegenwart von Platin) stets in der inneren, ersten Schicht vorhanden ist. Der Grund für diese meist sehr sorgfältig ausgeführte räumliche Trennung der Edelmetalle Rhodium und Palladium liegt in der bislang als gültig betrachteten Annahme, daß diese beiden Edelmetalle, stehen sie in unmittelbarem Kontakt zueinander, bei den für Dreiwegekatalysatoren typischen hohen Temperaturen durch die Bildung intermetallischer Phasen ihre katalytische Aktivität verlieren. Dies wäre gleichbedeutend mit der irreversiblen thermischen Deaktivierung des Katalysators.

Im Unterschied dazu beschreibt die EP 1 541 220 einen einschichtigen, Palladiumreichen Dreiwegekatalysator, in dem in der bevorzugten Ausführungsform wenigstens 70 Gew.-% des vorhandenen Palladiums und Rhodiums unter Legierungsbedingungen in nicht legiertem Zustand vorliegen. Als Trägermaterial sind bevorzugt Zirkon-reiche Cer/Zirkon-Sauerstoffspeichermaterialien und γ-Aluminiumoxid enthalten. Zur Herstellung des beschriebenen Katalysators werden alle verwendeten Komponenten in einer Suspension vereinigt und auf einen Tragkörper beschichtet. Im resultierenden Katalysator liegen also alle katalytisch aktiven Materialien im räumlicher Nähe zueinander vor.

US 20003/0180197 A1 offenbart einen Katalysator enthaltend eine katalytische Metallverbindung und eine makroporöse Verbindung, wobei die makroporöse Verbindung ein Sauerstoffspeichermaterial und ein Aluminiumoxid umfaßt. Der Katalysator ist dadurch charakterisiert, daß mindestens 40 % des Makroporenvolumens des Sauerstoffspeichermaterials und/oder des Aluminiumoxids mit Poren mit einem Porendurchmesser größer 120 Å in Verbindung gebracht werden. Die Schrift offenbart außer einer zweischichtigen Ausführungsform des Katalysators mit Palladium in der einen und Rhodium in der anderen Schicht, auch einen Einschicht-Katalysator, der durch Beschichtung eines Substrats mit einem Palladium-haltigen Washcoats und anschließende Penetration der oberen 10 Mikrometer der Beschichtung mit einer Rhodiumverbindung hergestellt wird.

Die ständig steigenden Anforderungen an die Emissionsminderung von Verbrennungsmotoren machen eine stetige Weiterentwicklung der Katalysatoren notwendig. Besoüdere Bedeutung haben dabei die Anspringtemperaturen des Katalysators für die Umsetzung der Schadstoffe und seine Temperaturstabilität. Die Anspringtemperatur für einen Schadstoff gibt an, ab welcher Temperatur dieser Schadstoff zu mehr als zum Beispiel 50 % umgesetzt wird. Je niedriger diese Temperaturen sind, um so früher können die Schadstoffe nach einem Kaltstart umgesetzt werden. Bei Vollast können direkt am Motorausgang Abgastemperaturen von bis zu 1150 °C auftreten. Je besser die Temperaturstabilität des Katalysators ist, um so näher kann er am Motor angeordnet werden. Dies verbessert ebenfalls die Abgasreinigung nach einem Kaltstart.

Die Katalysatoren nach dem genannten Stand der Technik weisen schon sehr gute Eigenschaften bezüglich Anspringtemperaturen und Temperaturstabilität auf. Die gesteigerten gesetzlichen Vorgaben machen jedoch die Suche nach noch besseren Katalysatoren notwendig.

Es war daher die Aufgabe dieser Erfindung, einen Katalysator zur Verfügung zu stellen, der gegenüber den Katalysatoren aus dem Stand der Technik weiter verringerte Anspringtemperaturen und eine verbesserte Temperaturstabilität aufweist.

Diese Aufgabe wird durch einen Katalysator gelöst, der zwei übereinander liegende katalytisch aktive Beschichtungen auf einem inerten Katalysatorträger aus Keramik oder Metall aufweist. Beide katalytisch aktive Schichten enthalten jeweils ein aktives Aluminiumoxid und ein Cer/Zirkon-Mischoxid, die mit Palladium katalytisch aktiviert sind. Die beiden Oxidmaterialien in der zweiten Schicht sind zusätzlich mit Rhodium katalytisch aktiviert. Weiterhin ist für es für den erfindungsgemäßen Katalysator wesentlich, dass das Cer/Zirkon-Mischoxid in der zweiten Schicht einen höheren Zirkonoxidgehalt aufweist als das Cer/Zirkon-Mischoxid in der ersten Schicht.

Dabei ist mit dem Begriff "erste Schicht" im Rahmen dieser Schrift immer diejenige Beschichtung gemeint, die zuerst auf den inerten Katalysatorträger aufgebracht wird, also die trägerseitige Schicht. Auf diese trägerseitige Schicht wird dann die so bezeichnete "zweite Schicht" aufgebracht, die im fertigen Katalysator mit dem zu reinigenden Abgas in direktem Kontakt steht.

Durch die im Hauptanspruch beschriebene, gewählte Zusammensetzung der Schichten wird überraschenderweise eine deutliche Verbesserung des Anspringverhaltens und der Temperaturstabilität des erfindungsgemäßen Katalysators gegenüber Katalysatoren nach dem Stand der Technik erreicht. Eine mögliche Ursache für diese Verbesserung insbesondere im Hinblick auf den in der EP 1 541 220 beschriebenen Katalysator liegt vermutlich darin, daß die räumliche Trennung der oxidischen. Trägermaterialien beibehalten wird. Untersuchungen der Erfinder haben gezeigt, daß die Trägerung von Rhodium auf einem Zirkon-reichen Cer/Zirkonoxid im allgemeinen zu alterungsstabileren Katalysatoren führt als die Trägerung von Rhodium auf Zirkon-armem Cer/Zirkonoxid. Durch die strenge Einhaltung dieser räumlichen Trennung der oxidischen Trägermaterialien ist es mit den erfindungsgemäßen Katalysatoren insbesondere möglich, bei geeigneter Wahl der Edelmetallkonzentrationen die sehr strengen Abgasnormen für SULEV- und PZEV-Fahrzeuge (SULEV = Super Ultra-low Emission Vehicle; PLEV = Partial Zero Emission Vehicle) zu erfüllen. Mit Katalysatoren nach dem Stand der Technik ist dies nicht ohne weiteres möglich.

Als katalytisch inerter Katalysatorträger eignen sich Wabenkörper aus Keramik oder Metall mit einem Volumen V, die parallele Strömungskanäle für die Abgase des Verbrennungsmotors aufweisen. Die Wandflächen der Strömungskanäle werden mit den beiden erfindungsgemäßen Katalysatorschichten beschichtet. Zur Beschichtung des Katalysatorträgers werden die für die jeweilige Schicht vorgesehenen Feststoffe in Wasser suspendiert. Im Falle der ersten Schicht handelt es sich um aktives Aluminiumoxid und ein erstes Cer/Zirkon-Mischoxid. Auf diesen Materialien wird Palladium ausgehend von bevorzugt Palladiumnitrat nach dem in der US 6,103,660 beschriebenen Verfahren unter Verwendung von Bariumhydroxid oder Strontiumhydroxid als Base abgeschieden. Mit der so erhaltenen Suspension kann sofort der Katalysatorträger beschichtet werden. Die aufgebrachte Schicht wird anschließend getrocknet und gegebenenfalls kalziniert. Danach wird die zweite Beschichtung aufgebracht. Hierzu werden wieder aktives Aluminiumoxid und ein zweites Cer/Zirkon-Mischoxid in Wasser suspendiert und darauf Palladium und Rhodium durch Zuführen von Palladiumnitrat und Rhodiumnitrat abgeschieden, wobei die Abscheidung der Edelmetalle gleichzeitig in einem Arbeitsgang oder nacheinander in verschiedenen Arbeitsgängen erfolgen kann.

Insgesamt werden in den erfindungsgemäßen Katalysator 0,1 bis 10 g/L Palladium bezogen auf das Volumen des Wabenkörpers eingebracht. Dabei werden die Mengen des Palladiumnitrats in den Beschichtungsschritten so gewählt, dass die Konzentration des Palladiums in der zweiten Schicht kleiner ist als die Konzentration des Palladiums in der ersten Schicht. Bevorzugt liegt das Verhältnis der Konzentration des Palladiums in der zweiten Schicht zur Konzentration des Palladiums in der ersten Schicht, jeweils bezogen auf das Volumen des Wabenkörpers, zwischen 0,001 und 0,9, besonders bevorzugt zwischen 0,01 und 0,7. Besonders vorteilhafte Ausführungsformen werden erhalten, wenn das beschriebene Verhältnis der Palladiumkonzentrationen zwischen 0,1 und 0,5 liegt.

Die Verwendung von Bariumhydroxid oder Strontiumhydroxid als Base für die Fällung von Palladiumnitrat in der ersten Schicht führt nach abschließender Kalzinierung zum Verbleib von Bariumoxid oder Strontiumoxid, welches auf der Oberfläche des aktiven Aluminiumoxid und des Cer/Zirkon-Mischoxids abgeschieden ist.

Die Rhodiumkonzentration in der zweiten Schicht des erfindungsgemäßen Katalysators beträgt bevorzugt zwischen 0,01 und 1 g/L Rhodium, bezogen auf das Volumen des Wabenkörpers.

Alternativ zur beschriebenen Vorgehensweise können die Edelmetalle auch auf jeder Feststoff-Komponente des Katalysators separat abgeschieden werden. Erst danach werden dann zum Beispiel mit Palladium aktiviertes Aluminiumoxid und mit Palladium aktiviertes Cer/Zirkon-Mischoxid gemeinsam in Wasser suspendiert und auf den Katalysatorträger aufgebracht. Eine solche Vorgehensweise ermöglicht es, die Konzentration der katalytisch aktiven Edelmetalle auf Aluminiumoxid einerseits und Cer/Zirkon-Mischoxid andererseits gezielt einzustellen. Bevorzugt wird für die separate Abscheidung der Edelmetalle auf Aluminiumoxid und Cer/Zirkon-Mischoxid das in der EP 957 064 beschriebene Verfahren eingesetzt.

Die tatsächlich anzuwendenden Edelmetallkonzentrationen hängen von den gewünschten Schadstoffumsätzen ab. Die höchsten hier angegebenen Konzentrationswerte sind für die Einhaltung der strengen Abgasnormen für SULEV- und PZEV-Fahrzeuge erforderlich. Bei besonderen Anforderungen an die Aktivität kann der Katalysator in einer speziellen Ausführungsform neben Palladium und Rhodium auch Platin enthalten. Bevorzugt werden dann aktives Aluminiumoxid und/oder Cer/Zirkon-Mischoxid in der zweiten Schicht zusätzlich mit Platin katalytisch aktiviert, so dass die zweite Schicht dann Palladium, Rhodium und Platin enthält. Die Konzentration des Platins, bezogen auf das Volumen des Wabenkörpers, liegt dann bevorzugt zwischen 0,01 und 1 g/L.

Das aktive Aluminiumoxid der ersten und zweiten Schicht ist bevorzugt durch Dotieren mit 1 bis 10 Gew.-% Lanthanoxid, bezogen auf das Gesamtgewicht des Aluminiumoxids, stabilisiert. Diese Dotierung bewirkt eine Verbesserung der Temperaturstabilität des Katalysators.

Um einen weiteren verbessernden Effekt hinsichtlich der Temperaturstabilität zu erzielen, können die Cer/Zirkon-Mischoxide in beiden Schichten mit wenigstens einem Oxid der Übergangsmetalle ausgewählt aus der Gruppe bestehend aus Eisen, Mangan, Titan, Silizium, Yttrium, Lanthan, Praseodym, Neodym, Samarium und Mischungen davon stabilisiert sein. Die Menge der zur Dotierung verwendeten Übergangsmetalloxide liegt bevorzugt zwischen 1 und 15 Gew.-%, besonders bevorzugt zwischen 5 und 10 Gew.-%, bezogen auf das Gesamtgewicht des stabilisierten Mischoxids.

Dabei weist erfindungsgemäß das Cer/Zirkon-Mischoxid der zweiten Schicht einen höheren Zirkonoxid-Gehalt auf als das Cer/Zirkon-Mischoxid der ersten Schicht. Bevorzugt liegt im Cer/Zirkon-Mischoxid in der ersten Schicht ein Gewichtsverhältnis von Ceroxid zu Zirkonoxid von 0,8 bis 1,2 vor. Das Cer/Zirkon-Mischoxid in der zweiten Schicht weist bevorzugt ein Gewichtsverhältnis von Ceroxid zu Zirkonoxid von 0,5 bis 0,1 auf. Die spezifische Oberfläche dieser Materialien liegt vorteilhafterweise in einem Bereich zwischen 50 und 100 m²/g. Bei besonderen Anforderungen an das Anspringverhalten des Katalysators kann darüber hinaus auch ein zusätzliches Cer/Zirkon-Mischoxid mit einem Gewichtsverhältnis von Ceroxid zu Zirkonoxid von 0,5 bis 0,1 in der ersten Schicht vorliegen.

Um besonderen Anforderungen an die Lebensdauer des Katalysators unter hohen Temperaturbelastungen gerecht zu werden, kann der zweiten Schicht des erfindungsgemäßen Katalysators zusätzlich Zirkonoxid zugesetzt werden. Bevorzugt ist dieses Zirkonoxid mit 1 bis 30 Gew.-% Seltenerdoxid, bezogen auf sein Gesamtgewicht, stabilisiert, wobei in der besonders geeigneten Ausführungsform nicht mehr als 10 Gew.-% Ceroxid, bezogen auf das Gesamtgewicht des stabilisierten Zirkonoxids, im Material enthalten sind.

Ferner kann der Zusatz von Lanthanoxid oder Neodymoxid zur ersten Schicht des erfindungsgemäßen Katalysators vorteilhaft sein.

Katalysatoren, die gemäß der hier gezeigten technischen Lehre hergestellt werden, eignen sich insbesondere als Dreiweg-Katalysatoren zur Reinigung von Abgasen eines mit einem Benzinmotor ausgerüsteten Kraftfahrzeugs. Sie können gleichermaßen als motornaher Startkatalysator oder als Hauptkatalysator im Unterbodenbereich des Fahrzeugs verwendet werden. Dabei ist sowohl die Kombination eines entsprechenden motornahen Startkatalysators mit anderen Katalysatortypen wie beispielsweise Stickoxid-Speicherkatalysatoren, als auch eine Kombination von erfindungsgemäßen Startkatalysatoren und erfindungsgemäßen Hauptkatalysatoren geeignet, je nach Fahrzeugapplikation.

Im folgenden wird die Erfindung an Hand einiger Beispiele und Figuren näher erläutert. Es zeigen:
- **Figur 1:**: Vergleich der Anspringtemperaturen eines erfindungsgemäßen Katalysators (#1) und eines doppelschichtigen Katalysators nach dem Stand der Technik (VK1), wobei die Temperaturen aufgetragen sind, bei denen 50 % des Zielumsatzes erreicht wurden (T₅₀);
- **Figur 2:**: Vergleich der Anspringtemperaturen eines erfindungsgemäßen Katalysators (#1) und eines doppelschichtigen Katalysators nach dem Stand der Technik (VK1), wobei die Temperaturen aufgetragen sind, bei denen 90 % des Zielumsatzes erreicht wurden (T₉₀);
- **Figur 3:**: Lambdaschnitt / CO/NOₓ-Kreuzungspunkte des erfindungsgemäßen Kataly- sators #1 im Vergleich zu einem doppelschichtigen Katalysator nach dem Stand der Technik (VK1) bei einer Abgastemperatur von 400°C und einem λ -Wechsel mit einer Frequenz von 1 Hz mit einer Amplitude von ± ½ A/F. Aufgetragen sind die Umsatzwerte für CO und NOₓ am Kreuzungspunkt der Umsatzkurven (CO/NOₓ) und, als THC3 bezeichnet, die gemessenen Kohlenwasserstoffumsätze, berechnet als Propan, an den CO/NOx- Kreuzungspunkten.
- **Figur 4:**: Relative Emissionen des erfindungsgemäßen Katalysators #1 im NEDC- Fahrzeugtest mit den Emissionswerten des doppelschichtigen Katalysators nach dem Stand der Technik VK1 als Bezugsgröße.
- **Figur 5:**: Vergleich der Anspringtemperaturen eines erfindungsgemäßen Katalysators (#2) und eines Katalysators gemäß der EP 1 541 220 (VK2), wobei die Temperaturen aufgetragen sind, bei denen 50 % des Zielumsatzes erreicht wurden (T₅₀);
- **Figur 6:**: Vergleich der Anspringtemperaturen eines erfindungsgemäßen Katalysators (#2) und eines Katalysators gemäß der EP 1 541 220 (VK2), wobei die Temperaturen aufgetragen sind, bei denen 90 % des Zielumsatzes erreicht wurden (T₉₀);
- **Figur 7:**: Lambdaschnitt / CO/NOₓ-Kreuzungspunkte des erfindungsgemäßen Kataly- sators #2 im Vergleich zu einem Katalysator gemäß der EP 1 541 220 (VK2) bei einer Abgastemperatur von 400°C und einem λ-Wechsel mit einer Frequenz von 1 Hz mit einer Amplitude von ± ½ A/F. Aufgetragen sind die Umsatzwerte für CO und NOₓ am Kreuzungspunkt der Umsatzkurven (CO/NOₓ) und, als THC3 bezeichnet, die gemessenen Kohlenwasserstoffumsätze, berechnet als Propan, an den CO/NOx- Kreuzungspunkten.

### Herstellung und Prüfung der in den Beispielen und Vergleichsbeispielen beschriebenen Katalysatoren:

Zur Herstellung der in Beispielen und Vergleichsbeispielen beschriebenen Katalysatoren wurden Cordierit-Wabenkörper mit einem Durchmesser von 10,16 cm und einer Länge von 10,16 cm beschichtet. Die Wabenkörper hatten eine Zelldichte von 93 Zellen pro Quadratzentimeter bei einer Zellwandstärke von 0,11 mm.

Auf diese Wabenkörper wurden nacheinander zwei verschiedene Beschichtungs-suspensionen aufgebracht. Nach dem Aufbringen der ersten Beschichtungssuspension wurden die Teile getrocknet und kalziniert. Dann erfolgte die Beschichtung mit der zweiten Beschichtungssuspension und ebenfalls eine Trocknung und Kalzination.

Alle so erhaltenen Katalysatoren wurden vor der Prüfung einer Alterung über die Dauer von 19 Stunden an einem Motorprüfstand mit herkömmlichem Benzinmotor mit Schubabschaltung ausgesetzt. Die Abgastemperatur vor Katalysatoreintritt während der Alterung betrug 950°C.

Nach Alterung erfolgte am Motorprüfstand die Untersuchung der Anspringtemperaturen und der CO/NOₓ-Kreuzungspunkte nach den üblichen, dem Fachmann bekannten Prüfverfahren. Die Untersuchung des Anspringverhaltens wurde in leicht fettem Abgas, d.h. bei einer Luftzahl λ des Abgases von 0,999 bis zu einer Abgastemperatur vor dem Katalysatoreintritt von 450°C durchgeführt. Die Bestimmung der CO/NOₓ-Kreuzungspunkte erfolgte bei einer Abgastemperatur von 400°C bei einem λ-Wechsel mit einer Frequenz von 1 Hz und einer Amplitude von ± ½ A/F. Die Raumgeschwindigkeit betrug in beiden Fällen ca. 100.000 h⁻¹.

### Vergleichsbeispiel 1

### Anfertigen der ersten Schicht:

Ein mit 3 Gew.-% Lanthanoxid stabilisiertes Aluminiumoxid (spezifische Oberfläche 140 m²/g) und ein Cer/Zirkon-Mischoxid mit einem Zirkonoxidgehalt von 50 Gew.-% wurden gemäß US 6,103,660 unter Verwendung von Strontiumhydroxid als Base gemeinsam mit Palladium ausgehend von Palladiumnitrat aktiviert. Die resultierende Suspension wurde direkt zur Beschichtung der Wabenkörper eingesetzt. Nach der Beschichtung wurden die Wabenkörper getrocknet und kalziniert. Die fertige erste Schicht enthielt die folgenden Beschichtungsmengen:

| | | |
|---|---|---|
| 80 g/l | mit Lanthan stabilisiertes Aluminiumoxid | |
| 55 g/l | Cer/Zirkon-Mischoxid mit 50 Gew.-% ZrO₂ | |
| 10 g/l | Strontiumoxid | (auf allen Komponenten) |
| 3,32 g/l | Palladium | (auf allen Komponenten) |

### Anfertigen der zweiten Schicht:

Das mit Lanthanoxid stabilisierte Aluminiumoxid und ein Cer/Zirkon-Mischoxid mit einem Zirkonoxidgehalt von 70 Gew.-% wurden in Wasser suspendiert. Danach wurde der Suspension eine wäßrige Lösung von Rhodiumnitrat unter ständigem Rühren zugeführt und die schon mit der ersten Schicht versehenen Wabenkörper mit der zweiten Beschichtungssuspension beschichtet, getrocknet und kalziniert. Die fertige zweite Schicht enthielt die folgenden Beschichtungsmengen:

| | | |
|---|---|---|
| 70 g/l | mit Lanthan stabilisiertes Aluminiumoxid | |
| 65 g/l | Cer/Zirkon-Mischoxid mit 70 Gew.-% ZrO₂ | |
| 0,21 g/l | Rhodium | (auf allen Komponenten) |

Die gesamte Edelmetallbeladung des erhaltenen Katalysators VK1 betrug 3,53 g/l bezogen auf das Volumen des Wabenkörpers.

### Beispiel 1

### Anfertigen der ersten Schicht:

Ein mit 3 Gew.-% Lanthanoxid stabilisiertes Aluminiumoxid (spezifische Oberfläche 140 m²/g) und ein Cer/Zirkon-Mischoxid mit einem Zirkonoxidgehalt von 50 Gew.-% wurden gemäß US 6,103,660 unter Verwendung von Strontiumhydroxid als Base gemeinsam mit Palladium ausgehend von Palladiumnitrat aktiviert. Die resultierende Suspension wurde direkt zur Beschichtung der Wabenkörper eingesetzt. Nach der Beschichtung wurden die Wabenkörper getrocknet und kalziniert. Die fertige erste Schicht enthielt die folgenden Beschichtungsmengen:

| | | |
|---|---|---|
| 76 g/l | mit Lanthan stabilisiertes Aluminiumoxid | |
| 50 g/l | Cer/Zirkon-Mischoxid mit 50 Gew.-% ZrO₂ | |
| 2 g/l | Strontiumoxid | (auf allen Komponenten) |
| 2,83 g/l | Palladium | (auf allen Komponenten) |

### Anfertigen der zweiten Schicht:

Das mit Lanthanoxid stabilisierte Aluminiumoxid und ein Cer/Zirkon-Mischoxid mit einem Zirkonoxidgehalt von 70 Gew.-% wurden in Wasser suspendiert. Danach wurde der Suspension eine wäßrige Lösung von Rhodiumnitrat und Palladiumnitrat unter ständigem Rühren zugeführt und die schon mit der ersten Schicht versehenen Wabenkörper mit der zweiten Beschichtungssuspension beschichtet, getrocknet und kalziniert. Die fertige zweite Schicht enthielt die folgenden Beschichtungsmengen:

| | | |
|---|---|---|
| 65 g/l | mit Lanthan stabilisiertes Aluminiumoxid | |
| 65 g/l | Cer/Zirkon-Mischoxid mit 70 Gew.-% ZrO₂ | |
| 0,49 g/l | Palladium | (auf allen Komponenten) |
| 0,21 g/l | Rhodium | (auf allen Komponenten) |

Die gesamte Edelmetallbeladung des so hergestellten Katalysators #1 betrug 3,53 g/l bezogen auf das Volumen des Wabenkörpers. Das Verhältnis der Konzentration des Palladiums in der zweiten Schicht zur Konzentration des Palladiums in der ersten Schicht, jeweils bezogen auf das Volumen des Wabenkörpers, betrug 0,173.

### Ergebnisse der Katalysatorprüfung:

Der erfindungsgemäße Katalysator #1 wurde im Vergleich zum ebenfalls doppelschichtigen Katalysator nach dem Stand der Technik aus Vergleichsbeispiel 1 (VK1) untersucht. Beide Katalysatoren wurden zunächst der bereits beschriebenen Alterung unterzogen und anschließend an einem Motorprüfstand und in einem Fahrzeug auf dem Rollenprüfstand geprüft.

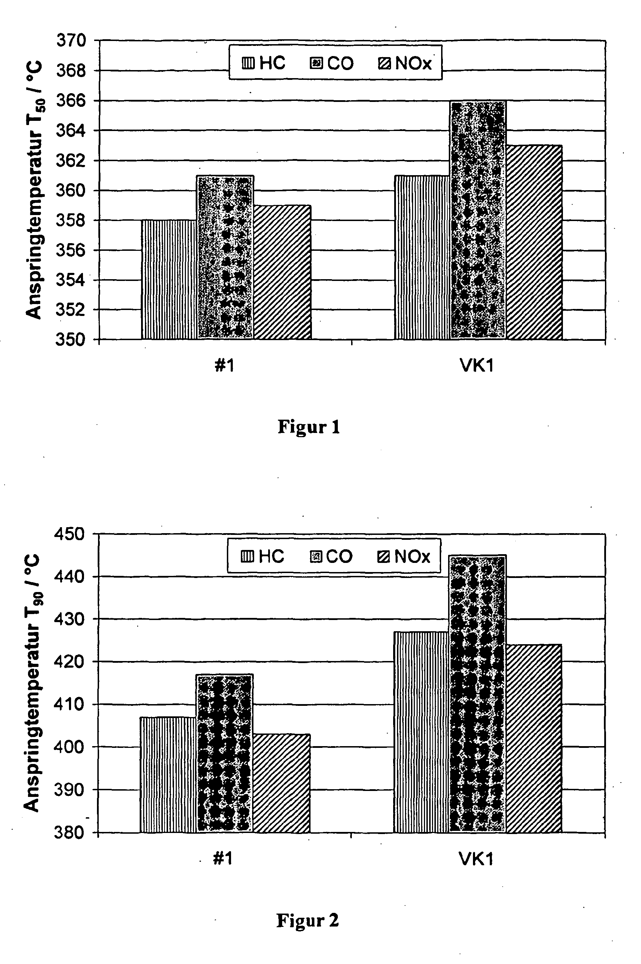

Die Figuren 1 und 2 zeigen einen Vergleich der Anspringtemperaturen, wobei in Figur 1 die Temperaturen aufgetragen sind, bei denen 50 % des Zielumsatzes erreicht wurden (T₅₀), während Figur 2 die Temperaturen zeigt, bei denen 90 % des Zielumsatzes erreicht wurden (T₉₀). Der erfindungsgemäße Katalysator #1 weist signifikant niedrigere Anspringtemperaturen auf. Insbesondere die T₉₀-Werte für #1 liegen um 20° bis 30° unter denen des Vergleichskatalysators nach dem Stand der Technik, VK1.

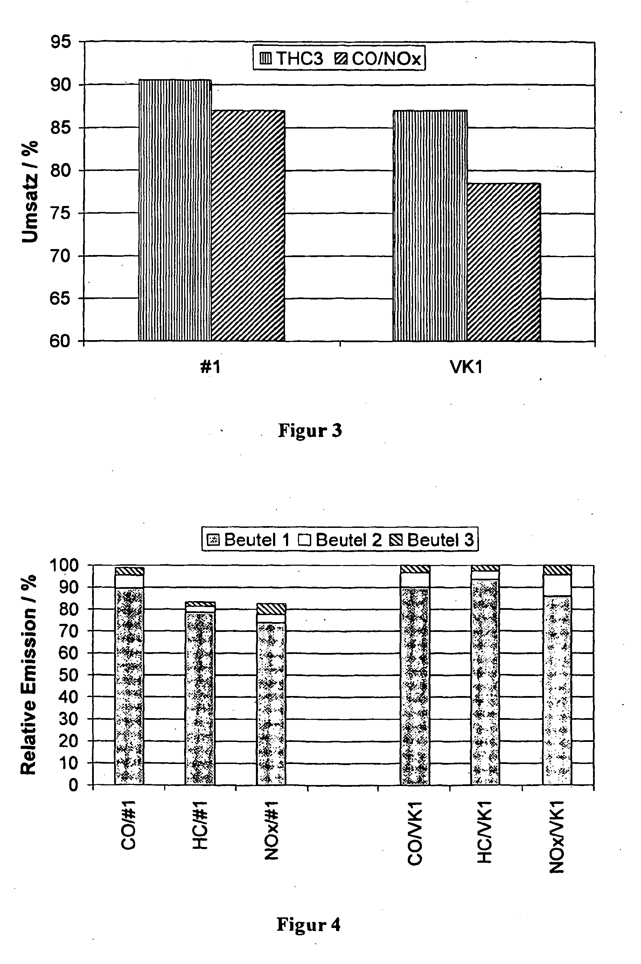

Deutlicher ausgeprägt sind die Leistungsvorteile des erfindungsgemäßen Katalysators gegenüber dem Vergleichsbeispiel im Lambdaschnitt (Figur 3). In Figur 3 sind die Umsatzwerte für CO und NOₓ am Kreuzungspunkt der Umsatzkurven (CO/NOₓ) und, als THC3 bezeichnet, die gemessenen Kohlenwasserstoffumsätze, berechnet als Propan, an den CO/NOx-Kreuzungspunkten gezeigt. Angegeben sind jeweils die aus Fett/Mager- und Mager/Fett-Übergängen gemittelten Werte. Die Vorteile des erfindungsgemäßen Katalysators können auf die Aktivierung des aktiven Aluminiumoxids und Zirkon-reichen Cer/Zirkon-Mischoxid in der zweiten Schicht durch Palladium zurückgeführt werden.

Die am Motorprüfstand beobachteten Vorteile des erfindungsgemäße Katalysator #1 gegenüber dem doppelschichtigen Vergleichskatalysator VK1 nach dem Stand der Technik konnten in einem NEDC-Fahrzeugtest bestätigt werden. In Figur 4 sind die gemessenen Emissionswerte relativ zueinander dargestellt. Die Gesamtemissionen des Vergleichskatalysators VK1 wurden mit 100 gleichgesetzt und stellen den Bezugspunkt dar. Die erhaltenen Beutelergebnisse belegen einen erheblichen Vorteil des erfindungsgemäßen Katalysators #1 insbesondere in der Kaltstartphase (Beutel 1). Aber auch in den anderen Phasen des Testzyklus (Beutel 2 und 3) werden für #1 geringere Emissionen beobachtet als für VK1.

### Vergleichsbeispiel 2

Zur Herstellung eines Katalysators mit einem Aufbau gemäß EP 1 541 220 wurden zwei Schichten aus identischer Beschichtungssuspension aufgebracht. Zur Herstellung der Beschichtungssuspension wurden das mit Lanthanoxid stabilisierte Aluminiumoxid, ein Cer/Zirkon-Mischoxid mit einem Zirkonoxidgehalt von 50 Gew.-% und ein Cer/Zirkon-Mischoxid mit einem Zirkonoxidgehalt von 70 Gew.-% in Wasser suspendiert. Danach wurde der Suspension eine wäßrige Lösung von Rhodiumnitrat und Palladiumnitrat unter ständigem Rühren zugeführt und der Wabenkörper zweifach beschichtet, getrocknet und kalziniert. Jede fertige Schicht hatte folgende Zusammensetzung:

| | | |
|---|---|---|
| 70 g/l | mit Lanthan stabilisiertes Aluminiumoxid | |
| 25 g/l | Cer/Zirkon-Mischoxid mit 50 Gew.-% ZrO₂ | |
| 32,5 g/l | Cer/Zirkon-Mischoxid mit 70 Gew.-% ZrO₂ | |
| 1 g/l | Strontiumoxid | (auf allen Komponenten) |
| 0,07 g/l | Rhodium | (auf allen Komponenten) |
| 0,37 g/l | Palladium | (auf allen Komponenten) |

Die gesamte Edelmetallbeladung des erhaltenen Katalysators VK2 betrug 0,88 g/l bezogen auf das Volumen des Wabenkörpers.

### Beispiel 2

### Anfertigen der ersten Schicht:

Die erste Schicht wurde wie in Beispiel 1 beschrieben hergestellt. Sie enthielt nach Fertigstellung die folgenden Beschichtungsmengen:

| | | |
|---|---|---|
| 76 g/l | mit Lanthan stabilisiertes Aluminiumoxid | |
| 50 g/l | Cer/Zirkon-Mischoxid mit 50 Gew.-% ZrO₂ | |
| 2 g/l | Strontiumoxid | (auf allen Komponenten) |
| 0,56 g/l | Palladium | (auf allen Komponenten) |

### Anfertigen der zweiten Schicht:

Auch die Herstellung der zweiten Schicht erfolgte in der in Beispiel 1 beschriebenen Weise. Die fertige zweite Schicht enthielt die folgenden Beschichtungsmengen:

| | | |
|---|---|---|
| 65 g/l | mit Lanthan stabilisiertes Aluminiumoxid | |
| 65 g/l | Cer/Zirkon-Mischoxid mit 70 Gew.-% ZrO₂ | |
| 0,18 g/l | Palladium | (auf allen Komponenten) |
| 0,14 g/l | Rhodium | (auf allen Komponenten) |

Die gesamte Edelmetallbeladung des so erhaltenen Katalysators #2 betrug 0,88 g/l bezogen auf das Volumen des Wabenkörpers. Das Verhältnis der Konzentration des Palladiums in der zweiten Schicht zur Konzentration des Palladiums in der ersten Schicht, jeweils bezogen auf das Volumen des Wabenkörpers, betrug 0,316.

### Ergebnisse der Katalysatorprüfung:

Der erfindungsgemäße Katalysator #2 aus Beispiel 2 wurde im Vergleich zu dem gemäß EP 1 541 220 hergestellten VK2 aus Vergleichsbeispiel 2 untersucht. Um eine besseren Vergleichbarkeit zu gewährleisten, wurden dieselben Materialien verwendet und beide Katalysatoren als Doppelschichtkatalysatoren ausgeführt, wobei VK2 nach Fertigstellung zwei identische Schichten enthielt. Die Katalysatoren wurden nach einer wie beschrieben durchgeführten Alterung am Motorprüfstand getestet.

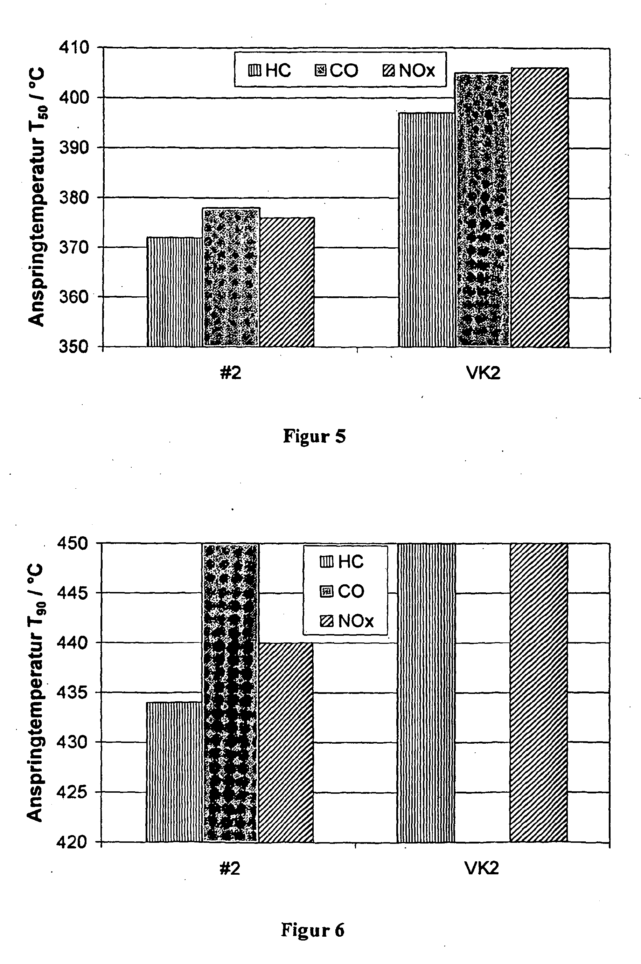

Die Figuren 5 und 6 zeigen einen Vergleich der Anspringtemperaturen, wobei in Figur 5 die Temperaturen aufgetragen sind, bei denen 50 % des Zielumsatzes erreicht wurden (T₅₀), während Figur 6 die Temperaturen zeigt, bei denen 90 % des Zielumsatzes erreicht wurden (T₉₀). Die Anspringtemperaturen T₅₀ des erfindungsgemäßen Katalysators #2 liegen je nach betrachtetem Schadgas um 25° bis 30° unter denen des Vergleichskatalysators VK2. Im Falle der T₉₀-Werte wurden für den erfindungsgemäßen Katalysator #2 Werte im Bereich 430 - 450°C je nach Schadgas ermittelt. Für den Vergleichskatalysator wurden für NOₓ und HC T₉₀-Werte von 450°C (Meßbereichsendtemperatur) ermittelt. Der T₉₀-Wert für CO war nicht ermittelbar: Ein Zielumsatz von 90 % CO konnte im untersuchten Temperaturbereich nicht erreicht werden.

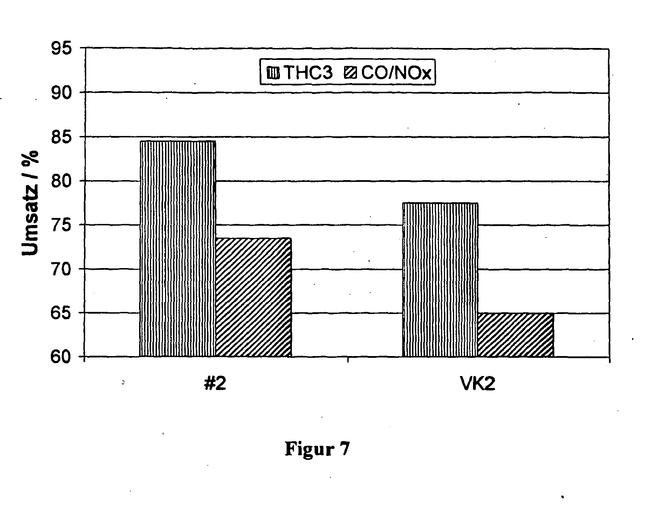

Auch im Lambdaschnitt (Figur 7) sind die Leistungsvorteile des erfindungsgemäßen Katalysators #2 gegenüber dem Katalysator gemäß EP 1 541 220 (VK2) deutlich zu erkennen.

Die gemessenen Daten belegen, daß durch die konsequente räumliche Trennung bestimmter oxidischer Trägermaterialien und die Vermeidung des Kontaktes von Rhodium mit dem Zirkon-ärmeren Cer/Zirkon-Mischoxid der ersten Schicht zu Aktivitätsvorteilen der resultierenden Katalysatoren insbesondere nach Alterung führt.

## Patentansprüche

1. Doppelschichtiger Dreiweg-Katalysator auf einem inerten Katalysatorträger aus Keramik oder Metall für die Reinigung der Abgase von Verbrennungsmotoren, **dadurch gekennzeichnet,**
**daß** beide Schichten jeweils ein aktives Aluminiumoxid und ein Cer/Zirkon-Mischoxid enthalten, die mit Palladium katalytisch aktiviert sind, wobei beide Oxidmaterialien der zweiten Schicht zusätzlich mit Rhodium katalytisch aktiviert sind, und das Cer/Zirkon-Mischoxid der zweiten Schicht einen höheren Zirkonoxidgehalt aufweist als das Cer/Zirkon-Mischoxid der ersten Schicht.

2. Dreiweg-Katalysator nach Anspruch 1,
**dadurch gekennzeichnet,**
**daß** es sich bei dem Katalysatorträger um einen Wabenkörper aus Keramik oder Metall mit einem Volumen V handelt, der parallele Strömungskanäle für die Abgase des Verbrennungsmotors aufweist, wobei die Wandflächen der Strömungskanäle mit den beiden Katalysatorschichten beschichtet sind und die Konzentration des Palladiums bezogen auf das Volumen des Wabenkörpers zwischen 0,1 und 10 g/L liegt.

3. Dreiweg-Katalysator nach Anspruch 2,
**dadurch gekennzeichnet,**
**daß** die Konzentration des Palladiums in der zweiten Schicht kleiner ist als die Konzentration des Palladiums in der ersten Schicht, jeweils bezogen auf das Volumen des Wabenkörpers.

4. Dreiweg-Katalysator nach Anspruch 3,
**dadurch gekennzeichnet,**
**daß** das Verhältnis der Konzentration des Palladiums in der zweiten Schicht bezogen auf das Volumen des Wabenkörpers zur Konzentration des Palladiums in der ersten Schicht bezogen auf das Volumen des Wabenkörpers zwischen 0,001 und 0,9 liegt.

5. Dreiweg-Katalysator nach Anspruch 4,
**dadurch gekennzeichnet,**
**daß** aktives Aluminiumoxid und Cer/Zirkon-Mischoxid der ersten Schicht zusätzlich mit Strontiumoxid oder Bariumoxid auf ihrer Oberfläche beschichtet sind.

6. Dreiweg-Katalysator nach einem der vorstehenden Ansprüche,
**dadurch gekennzeichnet,**
**daß** die Konzentration des Rhodiums in der zweiten Schicht bezogen auf das Volumen des Wabenkörpers zwischen 0,01 und 1 g/L beträgt.

7. Dreiweg-Katalysator nach Anspruch 6,
**dadurch gekennzeichnet,**
**daß** in der zweiten Schicht das aktive Aluminiumoxid und/oder das Cer/Zirkon-Mischoxid zusätzlich mit Platin katalytisch aktiviert ist und die Konzentration des Platins bezogen auf das Volumen des Wabenkörpers zwischen 0,01 und 1 g/L liegt.

8. Dreiweg-Katalysator nach Anspruch 1,
**dadurch gekennzeichnet,**
**daß** das aktive Aluminiumoxid der ersten und zweiten Schicht jeweils mit 1 bis 10 Gew.-% Lanthanoxid, bezogen auf das Gesamtgewicht des Aluminiumoxids, stabilisiert ist.

9. Dreiweg-Katalysator nach Anspruch 1,
**dadurch gekennzeichnet,**
**daß** die Cer/Zirkon-Mischoxide der beiden Schichten jeweils mit 1 bis 15 Gew.-% Übergangsmetalloxiden, bezogen auf das Gesamtgewicht der Mischoxide, stabilisiert sind, wobei es sich um Oxide der Übergangsmetalle ausgewählt aus der Gruppe bestehend aus Eisen, Mangan, Titan, Silizium, Yttrium, Lanthan, Praseodym, Neodym, Samarium und Mischungen handelt.

10. Dreiweg-Katalysator nach Anspruch 9,
**dadurch gekennzeichnet,**
**daß** das Cer/Zirkon-Mischoxid der ersten Schicht ein Gewichtsverhältnis von Ceroxid zu Zirkonoxid von 0,8 bis 1,2, und das Cer/Zirkon-Mischoxid der zweiten Schicht ein Gewichtsverhältnis von Ceroxid zu Zirkonoxid von 0,5 bis 0,1 aufweist.

11. Dreiweg-Katalysator nach Anspruch 10,
**dadurch gekennzeichnet,**
**daß** die erste Schicht zusätzlich ein Cer/Zirkon-Mischoxid mit einem Gewichtsverhältnis von Ceroxid zu Zirkonoxid von 0,5 bis 0,1 aufweist.

12. Dreiweg-Katalysator nach Anspruch 11,
**dadurch gekennzeichnet,**
**daß** die zweite Schicht zusätzlich Zirkonoxid enthält.

13. Dreiweg-Katalysator nach Anspruch 12,
**dadurch gekennzeichnet,**
**daß** das Zirkonoxid mit 1 bis 30 Gew.-% Seltenerdoxid, bezogen auf das Gesamtgewicht des Zirkonoxids, stabilisiert ist.

14. Dreiweg-Katalysator nach Anspruch 13,
**dadurch gekennzeichnet,**
**daß** das Zirkonoxid nicht mehr als 10 Gew.-% Ceroxid, bezogen auf das Gesamtgewicht des stabilisierten Zirkonoxids enthält.

15. Dreiweg-Katalysator nach Anspruch 1,
**dadurch gekennzeichnet,**
**daß** die erste Schicht zusätzlich Lanthanoxid oder Neodymoxid enthält.

16. Verwendung des Dreiweg-Katalysators nach einem der vorstehenden Ansprüche als motornaher Startkatalysator oder als Hauptkatalysator im Unterbodenbereich eines mit einem Benzinmotor ausgerüsteten Kraftfahrzeugs zur Reinigung der Abgase des Motors.

## Claims

1. Double-layer three-way catalyst on an inert catalyst support of ceramic or metal for the cleaning of the exhaust gases of internal combustion engines,
**characterized in that**
each layer contains an active aluminum oxide and a cerium/zirconium mixed oxide, which are catalytically activated with palladium, both oxide materials of the second layer additionally being catalytically activated with rhodium, and the cerium/zirconium mixed oxide of the second layer having a higher zirconium oxide content than the cerium/zirconium mixed oxide of the first layer.

2. Three-way catalyst according to Claim 1, **characterized in that**
the catalyst support is a honeycomb of ceramic or metal with a volume V, which has parallel flow channels for the exhaust gases of the internal combustion engine, the wall surfaces of the flow channels being coated with the two catalyst layers, and the concentration of the palladium based on the volume of the honeycomb being between 0.1 and 10 g/l.

3. Three-way catalyst according to Claim 2, **characterized in that**
the concentration of the palladium in the second layer is less than the concentration of the palladium in the first layer, based in each case on the volume of the honeycomb.

4. Three-way catalyst according to Claim 3, **characterized in that**
the ratio of the concentration of the palladium in the second layer based on the volume of the honeycomb relative to the concentration of the palladium in the first layer based on the volume of the honeycomb is between 0.001 and 0.9.

5. Three-way catalyst according to Claim 4, **characterized in that**
active aluminum oxide and cerium/zirconium mixed oxide of the first layer are additionally surface coated with strontium oxide or barium oxide.

6. Three-way catalyst according to one of the preceding claims,
**characterized in that**
the concentration of the rhodium in the second layer based on the volume of the honeycomb is between 0.01 and 1 g/l.

7. Three-way catalyst according to Claim 6, **characterized in that**
the active aluminum oxide and/or the cerium/zirconium mixed oxide in the second layer is additionally catalytically activated with platinum and the concentration of the platinum based on the volume of the honeycomb is between 0.01 and 1 g/l.

8. Three-way catalyst according to Claim 1, **characterized in that**
the active aluminum oxide of the first and second layers is in each case stabilized with 1 to 10% by weight of lanthanum oxide, based on the total weight of the aluminum oxide.

9. Three-way catalyst according to Claim 1, **characterized in that**
the cerium/zirconium mixed oxides of the two layers are each stabilized with 1 to 15% by weight of transition metal oxides, based on the total weight of the mixed oxides, said transition metal oxides being those of the metals selected from the group consisting of iron, manganese, titanium, silicon, yttrium, lanthanum, praseodymium, neodymium, samarium and mixtures.

10. Three-way catalyst according to Claim 9, **characterized in that**
the cerium/zirconium mixed oxide of the first layer has a weight ratio of cerium oxide to zirconium oxide of 0.8 to 1.2, and the cerium/zirconium mixed oxide of the second layer a weight ratio of cerium oxide to zirconium oxide of 0.5 to 0.1.

11. Three-way catalyst according to Claim 10, **characterized in that**
the first layer additionally comprises a cerium/zirconium mixed oxide with a weight ratio of cerium oxide to zirconium oxide of 0.5 to 0.1.

12. Three-way catalyst according to Claim 11, **characterized in that**
the second layer additionally comprises zirconium oxide.

13. Three-way catalyst according to Claim 12, **characterized in that**
the zirconium oxide is stabilized with 1 to 30% by weight of rare earth oxide, based on the total weight of the zirconium oxide.

14. Three-way catalyst according to Claim 13, **characterized in that**
the zirconium oxide contains not more than 10% by weight of cerium oxide, based on the total weight of the stabilized zirconium oxide.

15. Three-way catalyst according to Claim 1, **characterized in that**
the first layer additionally comprises lanthanum oxide or neodymium oxide.

16. Use of the three-way catalyst according to one of the preceding claims as a starter catalyst close-coupled to the engine or as a main catalyst in the underbody region of a motor vehicle equipped with a gasoline engine for cleaning the exhaust gases of the engine.

## Revendications

1. Catalyseur trifonctionnel à double couche sur un support de catalyseur inerte en céramique ou métal pour la purification des gaz d'échappement de moteurs à combustion, **caractérisé en ce que** les deux couches contiennent chacune un oxyde d'aluminium actif et un oxyde mixte cérium/zirconium, qui sont activés catalytiquement avec du palladium, les deux matériaux d'oxyde de la seconde couche étant également activés catalytiquement avec du rhodium, et l'oxyde mixte cérium/zirconium de la seconde couche présentant une teneur en oxyde de zirconium plus élevée que l'oxyde mixte cérium/zirconium de la première couche.

2. Catalyseur trifonctionnel selon la revendication 1, **caractérisé en ce que** le support de catalyseur est un corps en nid d'abeilles en céramique ou métal d'un volume V, qui comporte des canaux d'écoulement parallèles pour les gaz d'échappement du moteur à combustion, les surfaces des parois des canaux d'écoulement étant revêtues avec les deux couches de catalyseur et la concentration du palladium par rapport au volume du corps en nid d'abeilles étant comprise entre 0,1 et 10 g/L.

3. Catalyseur trifonctionnel selon la revendication 2, **caractérisé en ce que** la concentration du palladium dans la seconde couche est plus petite que la concentration du palladium dans la première couche, à chaque fois par rapport au volume du corps en nid d'abeilles.

4. Catalyseur trifonctionnel selon la revendication 3, **caractérisé en ce que** le rapport entre la concentration du palladium dans la seconde couche par rapport au volume du corps en nid d'abeilles et la concentration du palladium dans la première couche par rapport au volume du corps en nid d'abeilles est compris entre 0,001 et 0,9.

5. Catalyseur trifonctionnel selon la revendication 4, **caractérisé en ce que** l'oxyde d'aluminium actif et l'oxyde mixte cérium/zirconium de la première couche sont également revêtus avec de l'oxyde de strontium ou de l'oxyde de baryum sur leur surface.

6. Catalyseur trifonctionnel selon l'une quelconque des revendications précédentes, **caractérisé en ce que** la concentration du rhodium dans la seconde couche par rapport au volume du corps en nid d'abeilles est comprise entre 0,01 et 1 g/L.

7. Catalyseur trifonctionnel selon la revendication 6, **caractérisé en ce que** dans la seconde couche, l'oxyde d'aluminium activé et/ou l'oxyde mixte cérium/zirconium sont également activés catalytiquement avec du platine et la concentration du platine par rapport au volume du corps en nid d'abeilles est comprise entre 0,01 et 1 g/L.

8. Catalyseur trifonctionnel selon la revendication 1, **caractérisé en ce que** l'oxyde d'aluminium actif de la première et de la seconde couche est à chaque fois stabilisé avec 1 à 10 % en poids d'oxyde de lanthane, par rapport au poids total de l'oxyde d'aluminium.

9. Catalyseur trifonctionnel selon la revendication 1, **caractérisé en ce que** les oxydes mixtes cérium/zirconium des deux couches sont à chaque fois stabilisés avec 1 à 15 % en poids d'oxydes de métaux de transition, par rapport au poids total des oxydes mixtes, les oxydes étant ceux des métaux de transition choisis dans le groupe constitué par le fer, le manganèse, le titane, le silicium, l'yttrium, le lanthane, le praséodyme, le néodyme, le samarium et des mélanges.

10. Catalyseur trifonctionnel selon la revendication 9, **caractérisé en ce que** l'oxyde mixte cérium/zirconium de la première couche présente un rapport en poids entre l'oxyde de cérium et l'oxyde de zirconium de 0,8 à 1,2, et l'oxyde mixte cérium/zirconium de la seconde couche présente un rapport en poids entre l'oxyde de cérium et l'oxyde de zirconium de 0,5 à 0,1.

11. Catalyseur trifonctionnel selon la revendication 10, **caractérisé en ce que** la première couche comporte également un oxyde mixte cérium/zirconium ayant un rapport en poids entre l'oxyde de cérium et l'oxyde de zirconium de 0,5 à 0,1.

12. Catalyseur trifonctionnel selon la revendication 11, **caractérisé en ce que** la seconde couche contient également de l'oxyde de zirconium.

13. Catalyseur trifonctionnel selon la revendication 12, **caractérisé en ce que** l'oxyde de zirconium est stabilisé avec 1 à 30 % en poids d'un oxyde de terres rares, par rapport au poids total de l'oxyde de zirconium.

14. Catalyseur trifonctionnel selon la revendication 13, **caractérisé en ce que** l'oxyde de zirconium ne contient pas plus de 10 % en poids d'oxyde de cérium, par rapport au poids total de l'oxyde de zirconium stabilisé.

15. Catalyseur trifonctionnel selon la revendication 1, **caractérisé en ce que** la première couche contient également de l'oxyde de lanthane ou de l'oxyde de néodyme.

16. Utilisation du catalyseur trifonctionnel selon l'une quelconque des revendications précédentes en tant que catalyseur de démarrage proche du moteur ou en tant que catalyseur principal dans la zone de soubassement de carrosserie d'une automobile munie d'un moteur à essence pour la purification des gaz d'échappement du moteur.
